# EUROPÄISCHE PATENTANMELDUNG

(11) **EP 1 217 323 A1**
(43) Veröffentlichungstag der Anmeldung: **26.06.2002**
(21) Anmeldenummer: 01128096.3
(22) Anmeldetag: 27.11.2001
(51) Int. Cl.: F41A 27/08

(54) **Schildzapfenlagerung für den Wiegenträger eines grosskalibrigen Waffenrohrs**

(30) Priorität: 13.12.2000 DE 10062210
(71) Anmelder: Rheinmetall W & M GmbH, 29345 Unterlüss (DE)
(72) Erfinder: Baumann, Berthold, 29348 Eschede (DE); Wagner, Hartmut, 29328 Fassberg / Müden (DE)

(57) **Zusammenfassung**

Die Erfindung betrifft eine Schildzapfenlagerung für den Wiegenträger (1) eines großkalibrigen Waffenrohres mit an den beiden Seiten des Wiegenträgers (1) angeordneten Lagergehäusen (3) zur Aufnahme mit dem Wiegenträger verbundener Schildzapfen (2), wobei das jeweilige Lagergehäuse (3) mindestens ein Rollenlager (9) zur Aufnahme radialer Kräfte und ein Axiallager (10) zur Aufnahme axialer Kräfte enthält.

Um zu erreichen, daß zur Aufnahme der Radialkräfte Lager verwendet werden, die trotz eines geringen Einbauraumes eventuell auftretende Fluchtungsfehler der Schildzapfen (2) bzw. deren Lageraufnahmen (4) ausgleichen können, schlägt die Erfindung vor, als Rollenlager (9) Toroidal-Rollenlager zu verwenden.

Insbesondere können CARB (tm) Toroidal-Rollenlager der Firma SKF verwendet werden.

## Beschreibung

Die Erfindung betrifft eine Schildzapfenlagerung für den Wiegenträger eines großkalibrigen Waffenrohres mit an den beiden Seiten des Wiegenträgers angeordneten Lagergehäusen zur Aufnahme mit dem Wiegenträger verbundener Schildzapfen, wobei das jeweilige Lagergehäuse mindestens ein Rollenlager zur Aufnahme radialer Kräfte und ein Axiallager zur Aufnahme axialer Kräfte enthält.

Eine entsprechende Schildzapfenlagerung ist beispielsweise aus der DE 31 46 165 C2 bekannt. Bei dieser bekannten Schildzapfenlagerung werden als Radiallager Zylinder-Rollenlager verwendet. Allerdings hat sich gezeigt, daß bei derartigen Radiallagern hohe Anforderungen an die Fertigungsgenauigkeit gestellt werden müssen, weil bei Fluchtungsfehlern der Schildzapfen bzw. deren Aufnahmen beträchtliche Reibungsverluste in den Lagern auftreten können. Diese Reibungsverluste erfordern aber höhere Richtkräfte. Außerdem sind mit dem Verspannen der Schildzapfen zusätzliche Belastungen des Wiegenträgers verbunden, die das Trefferverhalten der Waffenanlage negativ beeinflussen können.

Der Erfindung liegt die Aufgabe zugrunde, eine Schildzapfenlagerung der eingangs erwähnten Art anzugeben, bei der zur Aufnahme der Radialkräfte Lager verwendet werden, die trotz eines geringen Einbauraumes eventuell auftretende Fluchtungsfehler der Schildzapfen bzw. deren Aufnahmen ohne zusätzliche Belastung des Wiegenträgers ausgleichen.

Diese Aufgabe wird erfindungsgemäß durch die Merkmale des Anspruchs 1 gelöst. Weitere, besonders vorteilhafte Ausgestaltungen der Erfindung offenbart der Unteranspruch.

Die Erfindung beruht auf dem Gedanken, als Radiallager Toroidal-Rollenlager zu verwenden. Dabei haben sich in der Praxis insbesondere CARB Toroidal-Rollenlager der Firma SKF bewährt, da derartige Rollenlager eine niedrige Bauhöhe aufweisen, Axialverschiebungen im Lager bis zu 10% der Lagerbreite und Schiefstellungen zwischen Gehäuse und Welle -und damit Fluchtungsfehler der Schildzapfen bzw. deren Aufnahmen- bis zu 1° ausgleichen, wobei die Belastung der Rollen immer noch gleichmäßig verteilt bleibt.

Weitere Einzelheiten und Vorteile der Erfindung ergeben sich aus dem folgenden anhand einer Figur erläuterten Ausführungsbeispiel:

Die Fig. zeigt den Längsschnitt einer von zwei beidseits einer Wiegenwalze angeordneten Schildzapfenlagerung. Dabei ist mit 1 die Wiegenwalze bezeichnet, welche ein nicht dargestelltes Wiegenrohr umfaßt, in dem das Waffenrohr einer entsprechenden Waffe gelagert ist. An der Wiegenwalze ist ein Schildzapfen 2 befestigt. Der Schildzapfen 2 wird von einem Lagergehäuse 3 aufgenommen, das in einer entsprechenden Lageraufnahme 4, z.B. des Turmes 5 eines Panzers oder der Oberlafette eines Geschützes, angeordnet ist. In dem Lagergehäuse 3 befindet sich zur Aufnahme radialer Kräfte erfindungsgemäß ein aus Innenring 6, Außenring 7 und torusförmigen Rollen 8 bestehendes Toroidal-Rollenlager 9 sowie zur Aufnahme axialer Kräfte ein an sich bekanntes Axiallager 10.

Zur Justierung der axialen Lage des Waffenrohres sowie zum Minimieren des Lagerspieles des Axiallagers 10 ist ein an sich bekannter verstellbarer Gewindering 11 vorgesehen (vgl. auch die eingangs erwähnte DE 31 46 165 C2 ), der sich an der Innenwand 12 der Lageraufnahme 4 des Turmes 5 abstützt.

Die Befestigung des Toroidal-Rollenlagers 9 erfolgt über entsprechend gewählte Schrumpfsitze, mittels welcher der Innenring 6 auf dem Schildzapfen 2 und der Außenring 7 im Lagergehäuse 3 befestigt wird. Außerdem ist der Innenring 6 des Toroidal-Rollenlagers 9 axial durch einen Stützring 13 von der Wiegenwalze beabstandet. Der Außenring 7 des Toroidal-Rollenlagers 9 wird im Lagergehäuse 3 durch eine Befestigungsscheibe 14 derart festgesetzt, daß der Innenring 6 sich gegen den Außenring 7 verschieben bzw. schiefstellen kann, um Fluchtungsfehler der Schildzapfen 2 bzw. der Lageraufnahmen 4 ausgleichen zu können.

### Bezugszeichenliste

- 1: Wiegenwalze, Wiegenträger
- 2: Schildzapfen
- 3: Lagergehäuse
- 4: Lageraufnahme
- 5: Turm
- 6: Innenring
- 7: Außenring
- 8: Rollen
- 9: Toroidal-Rollenlager, Rollenlager
- 10: Axiallager
- 11: Gewindering
- 12: Innenwand
- 13: Stützring
- 14: Befestigungsscheibe

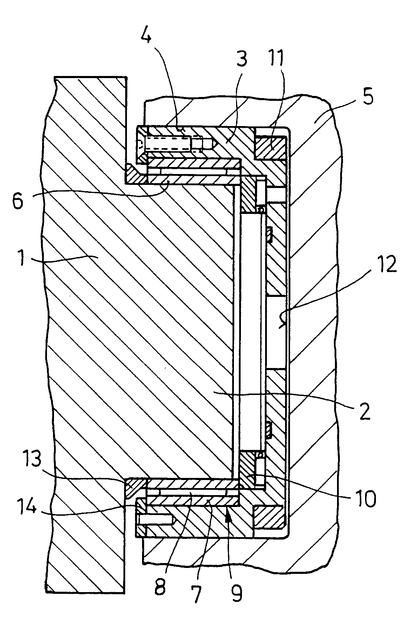

## Patentansprüche

1. Schildzapfenlagerung für den Wiegenträger (1) eines großkalibrigen Waffenrohres mit an den beiden Seiten des Wiegenträgers (1) angeordneten Lagergehäusen (3) zur Aufnahme mit dem Wiegenträger verbundener Schildzapfen (2), wobei das jeweilige Lagergehäuse (3) mindestens ein Rollenlager (9) zur Aufnahme radialer Kräfte und ein Axiallager (10) zur Aufnahme axialer Kräfte enthält, **dadurch gekennzeichnet, daß** es sich bei dem Rollenlager (9) um ein Toroidal-Rollenlager handelt.

2. Schildzapfenlagerung nach Anspruch 1, **dadurch gekennzeichnet, daß** es sich bei dem Rollenlager (9) um ein CARB Toroidal-Rollenlager handelt.
